# EUROPEAN PATENT SPECIFICATION

(11) **EP 2 130 674 B1**
(45) Date of publication and mention of the grant of the patent: **06.08.2014**
(21) Application number: 08720609.0
(22) Date of filing: 26.03.2008
(51) Int. Cl.: B42D 25/00, B32B 27/36, G06K 19/07, G06K 19/077, B32B 9/02

(54) **CORE SHEET FOR CARD**
KERNBLATT FÜR KARTE
FEUILLE CENTRALE POUR CARTE

(30) Priority: 29.03.2007 JP 2007087716
(43) Date of publication of application: 09.12.2009
(73) Proprietor: MITSUBISHI PLASTICS, INC., Tokyo 103-0021 (JP)
(72) Inventor: TANAKA, Kazuya, Nagahama-shi Shiga 526-8660 (JP); TERADA, Shigenori, Nagahama-shi Shiga 526-8660 (JP); NISHIKAWA, Yoshiki, Nagahama-shi Shiga 526-8660 (JP)
(74) Representative: Gille Hrabal
(86) International application number: PCT/JP2008/000730
(87) International publication number: WO 2008/129833

(56) References cited:
- EP-A1- 1 862 507
- EP-A2- 0 694 874
- JP-A- 09 131 835
- JP-A- 09 157 424
- JP-A- 2001 054 941
- JP-A- 2004 230 626
- JP-A- 2005 007 695
- JP-A- 2005 054 179
- JP-A- 2005 324 514
- US-A1- 2004 230 001
- US-A1- 2006 040 119
- US-B1- 6 350 530
- US-B1- 6 372 331
- DATABASE WPI Week 200524 Thomson Scientific, London, GB; AN 2005-225963 XP000002657366, & JP 2005 054179 A (SUMITOMO BAKELITE CO LTD) 3 March 2005 (2005-03-03)

## Description

### [Technical field]

The present invention relates to a core sheet for card for the purpose of forming a layered card, which is excellent for forming information-recording cards such as membership cards, ID cards, credit cards, cash cards and IC cards, and particularly is a core sheet for card for the purpose of forming an environment-reaction layered card having plastic derived from plant raw materials (referred to as "plant raw material plastic") as a main raw material.

### [Background art]

Commonly, information-recording cards such as credit cards and cash cards are formed, for instance, by printing on the front and back sides of a thick and hard white core sheet, wrapping by layering over-sheets on both the front and back sides of the core sheet, and providing a magnetic recording layer, or the like, as necessary.

In addition, information-recording cards such as IC cards are commonly formed by sandwiching and layering between two core sheets an inlet sheet provided with an IC chip and an antenna, and layering over-sheets on both the front and back sides of each core sheet.

Since the majority of the plastics used as raw materials for such various cards were discarded after use, they have been pointed out as one of the causes disturbing the global environment, and in recent years, efficient utilization of exhaustible resources has become a concern. Utilization of renewable resources is also one of the important issues in the field of information-recording card fabrication.

Currently, utilization of plant raw material plastic is drawing the most attention as a solution for the efficient utilization of exhaustible resources. If the amount of plant raw material plastic used increased, not only the amount of exhaustible resource used would be reduced, but also an important contribution to recycling utilization of resources would be possible.

Among them, lactic acid series polymers are plant raw material plastics having lactic acid obtained by fermentation of starch as raw materials, which can be mass-produced by the chemical industry. Furthermore, owing to their excellent transparency, robustness and the like, they are drawing interests as alternative raw materials to polyethylene terephthalate and polyvinyl chloride, and the idea of using such lactic acid series polymers as raw materials have also been proposed in the field of information-recording card fabrication.

For instance, card is disclosed in Patent Reference 1, in which at least a portion of a card comprising a single layer or a plurality of layers is formed with a degradable plastic.

A biodegradable card is disclosed in Patent Reference 2, which is a biodegradable plastic card comprising multiple layers, having as a center core a plastic sheet which is at least biodegradable, on both sides of which are layered over-sheets comprising a thermoplastic polymer having as a main component polylactic acid or a co-polymer of lactic acid and oxycarboxylic acid.

An information-recording card is disclosed in Patent Reference 3, in which at least a portion of the support is constituted by a crystallized and/or stretched lactic acid series polyester.

An IC card is disclosed in Patent Reference 4, in which a substrate having as a main component a biodegradable resin is used for the support.

An IC card is disclosed in Patent Reference 5, in which the card substrate is constituted with a biodegradable plastic, and the antenna is constituted with aluminum.

In addition, a biodegradable card is disclosed in Patent Reference 6, in which, in a biodegradable card, which is a card constituted by multiple layers and using a biodegradable resin, a pair of layers at the center of the card in the thickness direction, which are layers of thermoplastic polymer having as a main component polylactic acid, or, a co-polymer of lactic acid and oxycarboxylic acid that has been biaxially stretched, are provided so that the direction of the orientation with respect to one another in the two-dimensional direction along the layers is identical.

[Patent Reference 1] Japanese Patent Application Laid-open No. H08-267968
[Patent Reference 2] Japanese Patent Application Laid-open No. H09-131835
[Patent Reference 3] Japanese Patent Application Laid-open No. H09-157424
[Patent Reference 4] Japanese Patent Application Laid-open No. H09-240174
[Patent Reference 5] Japanese Patent Application Laid-open No. 2002-099885
[Patent Reference 6] Japanese Patent Application Laid-open No. 2004-230626

### [Disclosure of the invention]

### [Issues to be addressed by the invention]

Many cards having a lactic acid series polymer as a main raw material proposed in prior art had issues of heat resistance and impact resistance, and furthermore, adhesiveness between each layer (heat fuse-bonding ability).

Thus, the present invention proposes a novel layered card having excellent heat resistance and impact resistance, as well as adhesiveness between each layer (heat fuse-bonding ability), which is an environment-reaction layered card having a plant raw material plastic as a main raw material, and above all, a core sheet for card for the purpose of forming in particular such a layered card.

### [Means to address the issues]

A core sheet for card is proposed, which is a core sheet for card (A) to be used together with an over-sheet (B) provided with a structure in which at least one layer is a layer having as a main component resin an aromatic polyester series resin or a polycarbonate series resin or a mixed resin of these both for the purpose of forming a layered card,
comprising one layer or two or more layers that are layered, among which at least one layer is a lactic acid series resin layer having a lactic acid series polymer as a main component resin.

The above lactic acid series resin layer may be a lactic acid series resin layer having as a main component resin a lactic acid series polymer, a non-crystalline aromatic polyester series resin or a thermoplastic elastomer.

The lactic acid series resin layer comprises two or more layers that are layered, among which, at least one layer, (A1) layer, is a layer having as a main component resin an aromatic polyester series resin or a polycarbonate series resin or a mixed resin of these both, and
at least one layer other than (A1) layer, (A2) layer is a lactic acid series resin layer having as a main component resin a lactic acid series polymer.

Using such a core sheet for card of the present invention, a layered card can be formed, such as in the following.

That is to say, a layered card can be formed, which is a layered card provided with one sheet or two or more sheets of a core sheet (A) comprising two or more layers, and one sheet or two or more sheets of an over-sheet (B) comprising one layer or two or more layers,
at least one layer constituting core sheet (A) being a lactic acid series resin layer having a lactic acid series polymer as a main component resin, and
at least one layer constituting over-sheet (B) being a layer having as a main component resin an aromatic polyester series resin or a polycarbonate series resin or a mixed resin of these both.

In so doing, among the layers constituting core sheet (A), at least the (A1) layer is a layer having as a main component resin an aromatic polyester series resin or a polycarbonate series resin or a mixed resin of these both, and,
among the layers constituting core sheet (A), at least one layer other than the above (A1) layer, (A2) layer, is a lactic acid series resin layer having a lactic acid series polymer as a main component resin.

Meanwhile, at least one layer constituting over-sheet (B) is a layer having as a main component resin a mixed resin of an aromatic polyester series resin and a polycarbonate series resin.

In addition, forming a layered card provided with an inlet sheet (C) implemented with electronic parts is also possible.

Then, environmental-reaction layered card can be formed, in which plant raw material plastic amounts to 20 to 80 percent in mass of the total plastic raw materials constituting the layered card.

Such a layered card is an environment-reaction layered card having as a main raw material a lactic acid series polymer, which is a plant raw material plastic, and has excellent heat resistance, impact resistance, as well as, adhesiveness between each layer (heat fuse-bonding ability). Thus, the card can be used suitably, for instance, for a membership card, an ID card, a credit card, a cash card and the like. In addition, if constituted so as to sandwich between two core sheets (A) an inlet sheet (C) provided with an IC chip and an antenna, the card can be used suitably, for instance, for an IC card, or the like.

### [Brief description of the drawings]

[Fig. 1] (1) to (4) are all figures for describing constitution examples for the layered card according to an embodiment outside the present invention, and are cross-sectional views showing each sheet in a disassembled state prior to pasting.
[Fig. 2] Similarly, (1) to (3) are all figures for describing constitution examples for the layered card according to an embodiment outside the present invention, and are cross-sectional views showing each sheet in a disassembled state prior to pasting.
[Fig. 3] (1) to (4) are all figures for describing constitution examples for the layered card according to the present invention, and are cross-sectional views showing each sheet in a disassembled state prior to pasting.
[Fig. 4] (1) to (4) are all cross-sectional views for describing constitution examples for the layered card according to the present invention.

### [Embodiments for carrying out the invention]

Hereinafter, embodiments according to the layered card using the core sheet for card of the present invention will be described; however, the scope of the present invention is not limited to the embodiments described below.

### <First embodiment, which is not part of the invention>

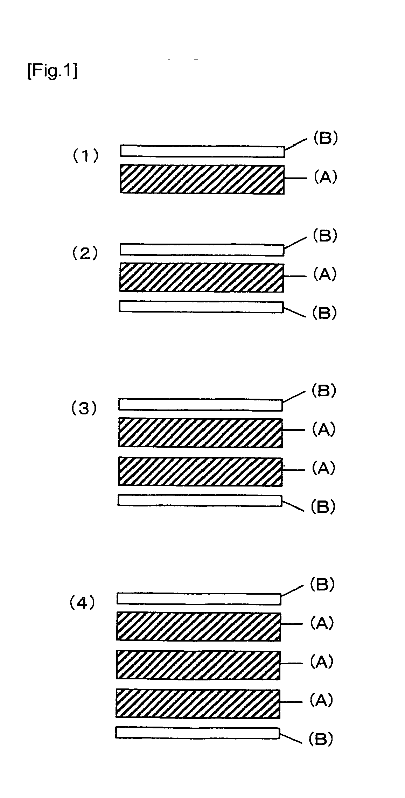

The layered card of the first embodiment (hereinafter referred to "the present layered card") is, as shown in Fig. 1 to Fig. 2, a layered card provided with one sheet or two or more sheets of a core sheet (A) and one sheet or two or more sheets of an over-sheet (B).

As a concrete layered constitution, it suffices that a core sheet (A) and an over-sheet (B) are provided, and layered constitutions such as (B)/(A), (B)/(A)/(B) and (B)/(A)/(A)/(B), for instance, as shown in Fig. 1 (1) to (4), can be cited. Such layered constitutions can be applied, for instance, to membership cards, ID cards, credit cards, cash cards and the like.

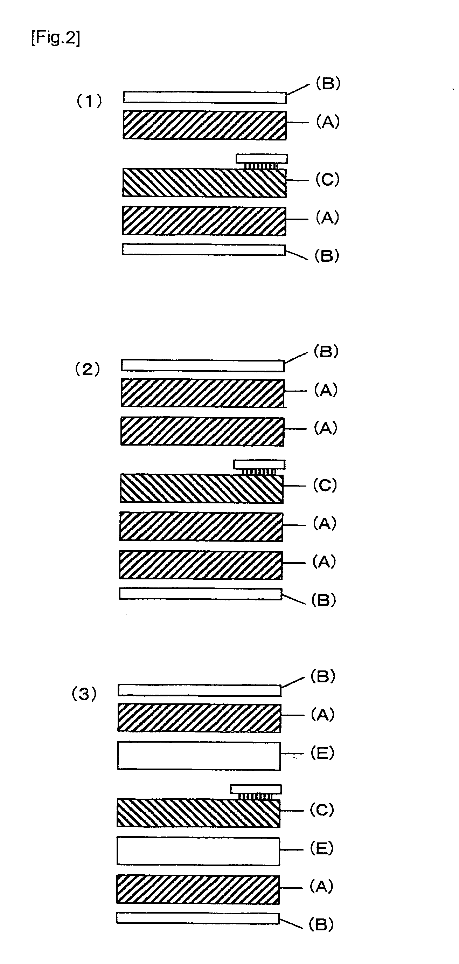

In addition, other sheets than core sheet (A) and over-sheet (B) may be provided and, for instance, an inlet sheet (C) comprising implemented electronic parts, or another core sheet (E) with a different resin composition from core sheet (A) may be provided. Layered constitutions such as (A)/(B)/(C), (B)/(A)/(C)/(B), (B)/(A)/(C)/(A)/(B) and (B)/(A)/(E)/(C)/(E)/(A)/(B), for instance as shown in Fig. 2 (1) to (3), can be cited. Such layered constitutions can be applied, for instance, to IC cards or the like.

Note that, providing another layer such as an adhesive layer (D) or a print layer in each space between the sheets in the layered constitutions given above as examples is optional.

### [Core sheet (A)]

The core sheet (A) can be formed as a single layer sheet of lactic acid series resin layer comprising a lactic acid series resin composition having a lactic acid series polymer as a main component resin (also referred to as base resin).

In addition to a lactic acid series polymer, a non-crystalline aromatic polyester series resin and a thermoplastic elastomer can be combined as a main component resin in the lactic acid series resin composition.

It is desirable to include a coloring material in the lactic acid series resin composition and the lactic acid series resin layer.

### (Lactic acid series polymer)

As lactic acid series polymer used in the base resin of the core sheet (A), poly(L-lactic acid), which structural unit is L-lactic acid, poly(D-lactic acid), which structural unit is D-lactic acid, poly(DL-lactic acid), which structural units are L-lactic acid and D-lactic acid, or mixtures thereof, can be cited.

As polymerization methods for these lactic acid series polymers, any well known methods such as condensation polymerization method and ring-opening polymerization method, can be cited.

For instance, in the condensation polymerization method, a lactic acid series polymer having an arbitrary composition can be obtained by direct dehydration condensation polymerization of L-lactic acid or D-lactic acid, or a mixture thereof.

In the ring-opening polymerization method, a polylactic acid series polymer can be obtained, by polymerizing a lactide, which is a cyclic dimer of lactic acid, using a chosen catalyst, while using a polymerization adjuster or the like as necessary. In so doing, a lactic acid series polymer having an arbitrary composition and crystallinity can be obtained with lactides including L-lactide, which is a dimer of L-lactic acid, D-lactide, which is a dimer of D-lactic acid, and further, DL-lactide comprising L-lactic acid and D-lactic acid, by mixing as necessary and polymerizing these.

In addition, the lactic acid series polymer may be a co-polymer of poly(L-lactic acid), poly(D-lactic acid), poly(DL-lactic acid), or mixtures thereof and hydroxycarboxylic acid or diol/dicarboxylic acid.

Here, as the above "hydroxycarboxylic acid", bifunctional aliphatic hydroxy-carboxylic acids such as optical isomers of lactic acid (D-lactic acid with respect to L-lactic acid, and L-lactic acid with respect to D-lactic acid), glycolic acid, 3-hydroxybutyric acid, 4-hydroxybutyric acid, 2-hydroxy n-butyric acid, 2-hydroxy 3,3-dimethyl butyric acid, 2-hydroxy 3-methyl butyric acid, 2-methyl lactic acid and 2-hydroxy caproic acid and lactones such as caprolactone, butyrolactone, and valerolactone may be cited.

In addition, as the above "diol", ethylene glycol, 1,4-butanediol, 1,4-cyclohexane dimethanol and the like may be cited, and as the above "dicarboxylic acid", succinic acid, adipic acid, suberic acid, sebacic acid and dodecane dioic acid, and the like, may be cited.

In addition, according to necessities such as increasing heat resistance, the above lactic acid series polymers may contain either or both of a non-aliphatic dicarboxylic acid such as terephthalic acid and a non-aliphatic diol such as ethylene oxide adduct of bisphenol A as small amount co-polymer components, in such a range that the properties inherent to lactic acid series polymers are not lost, that is to say, in such a range that 90 percent in mass or more of lactic acid series polymer component is contained.

In addition, for the purpose of increasing the molecular weight, a small amount of a chain extender, for instance, diisocyanate compound, epoxy compound, acid anhydride, or the like, may be contained.

The DL constitution ratio of lactic acid series polymer is preferably L isomer:D isomer=100:0 to 90:10 or L isomer:D isomer=0:100 to 10:90. Among these, L isomer:D isomer=99.5:0.5 to 94:6 or L isomer:D isomer=0.5:99.5 to 6:94 is more desirable. If within such range, heat resistance is easily obtained, and use in a wide-range of applications is possible.

Among the above-mentioned lactic acid series polymers, one desirable example is a lactic acid series polymer comprising a lactic acid series polymer in which the proportion of D-lactic acid is 3% or more and 97% or less and a lactic acid series polymer in which the proportion of D-lactic acid is 2% or less or 98% or more, mixed with a proportion in mass of 30:70 to 90:10 and particularly 40:60 to 80:20, of which particularly 50:50 to 70:30.

In so doing, a "lactic acid series polymer in which the proportion of D-lactic acid is 3% or more and 97% or less" is one in which the proportion of D-lactic acid and L lactic acid is L isomer:D isomer=97:3 to 3:97, one in which L isomer:D isomer=95:5 to 5:95 being more desirable, one in which L isomer:D isomer=90:10 to 10:90 being even more desirable, and one in which L isomer:D isomer=85:15 to 15:85 being particularly desirable.

A "lactic acid series polymer in which the proportion of D-lactic acid is 2% or less or 98% or more" is one in which the proportion of D-lactic acid and L lactic acid is L isomer:D isomer=98:2 to 100:0 or 2:98 to 0:100, one in which L isomer:D isomer=99:1 to 100:0 or 1:99 to 0:100 being more desirable, and one in which L isomer:D isomer=99.5:0.5 to 100:0 or 0.5:99.5 to 0:100 being particularly desirable.

The weight average molecular weight of lactic acid series polymer is 50,000 to 400,000 and preferably 100,000 to 250,000. If within the range of 50,000 to 400,000, practical physical properties can be obtained, and, a situation such as forming processability is poor due to molten viscosity being too high does not occur.

Commercial products can be also used as lactic acid series polymer. For instance, "Lacea" series manufactured by Mitsui Chemicals, Inc., "Nature Works" series manufactured by Nature Works LLC, and the like, may be cited.

### (Aromatic polyester series resin)

It suffices for aromatic polyester series resins used for the base resin of core sheet (A) to be resins from the condensation polymerization of an aromatic dicarboxylic acid component and a diol component, among which, a so-called co-polymer polyester is desirable, in which one component or both components among the aromatic dicarboxylic acid component and the diol component does not comprise a single compound, but comprises several species of compounds.

As aromatic dicarboxylic acid component of co-polymer polyester, those containing terephthalic acid, isophthalic acid and naphthalene dicarboxylic acid can be cited, and those in which a portion of these carboxylic acids has been substituted by other dicarboxylic acids are desirable.

As other dicarboxylic acid components, oxalic acid, malonic acid, succinic acid, adipic acid, azelaic acid, sebacic acid, neopentyl acid, diphenyl ether dicarboxylic acid, p-oxy benzoic acid, and the like, may be cited. These may be one species or two or more species, and in addition, the amount of other dicarboxylic acids to be substituted can be also selected suitably.

As diol components of co-polymer polyester, ethylene glycol, diethylene glycol, triethylene glycol, cyclohexane dimethanol, and the like, may be cited. However, it does not matter if a portion of these diols is substituted with other diol components.

As other diol components, propylene glycol, trimethylene glycol, tetramethylene glycol, hexamethylene glycol, neopentyl glycol, polyalkylene glycol, 1,4-cyclohexane dimethanol, glycerin, pentaerythritol, trimethylol, methoxy polyalkylene glycol, and the like, may be cited. These may be one species or two or more species, and in addition, the amount of other dicarboxylic acids to be substituted can be also selected suitably.

Among the aromatic polyester series resins (containing a co-polymer polyester) described above, as aromatic polyester series resin to be used for the base resin of core sheet (A), it is important to be a substantially non-crystalline polyester series resin.

That is to say, polyethylene terephthalate (PET) may be cited as a representative example of aromatic polyester series resin; however this PET is a semi-crystalline resin, which, although if rapidly cooled after being melted is in a non-crystal state without crystallizing, crystallizes if heated again within a range of on the order of 150 to 250°C. As appropriate temperatures for substantial melt-extrusion, such resins need to be heated at higher temperatures than the melting point of this PET, 270°C or higher. Consequently, this means that a temperature setting of 270°C or higher is necessary even for mixing with a lactic acid series polymer and melt-extruding; however at this high temperature, lactic acid series polymer gives rise to thermal decomposition, and a melt-extruded sheet becomes difficult to obtain. Supposing that a melt-extruded sheet is rapidly cooled to become non-crystalline, when a sheet for card is superposed and heat-pressed, the sheet crystallizes and no longer gives rise to fuse-bonding ability. Thus, as aromatic polyester series resin, it is important to be a substantially non-crystalline polyester series resin.

Here, "substantially non-crystalline polyester series resin" means one with a low crystallinity, which does not give rise to clouding or fuse-bonding defects due to crystallization even if heat processing frequently conducted in practice is conducted, such as press fuse-bonding. More specifically, a resin for which the amount of heat of fusion is 0 or 15J/g or lower as determined by differential scanning calorimetry (based on methods described in JIS K7121 and JIS K7122), which analyzes heat properties, can be considered as being a substantially non-crystalline polyester series resin.

When such points of views are added, as preferred aromatic polyester series resins, an aromatic co-polymer polyester from the condensation polymerization of dicarboxylic acid components, in which a portion of the dicarboxylic acid components is terephthalic acid and the remaining dicarboxylic acid components are substituted with another dicarboxylic acid, and diol components, in which a portion of the diol components is ethylene glycol component and the remaining diol components have been substituted with another diol component (for instance 1,4-cyclohexane dimethanol), can be cited.

In so doing, from the point of view of raising the degree of non-crystallinity, containing 10 to 50 percent in mole, of which 12 percent in mole or more, of which particularly 15 percent in mole or more of another diol component, in particular 1,4-cyclohexane dimethanol (CHDM) component, is desirable. The upper limit value is more preferably 47 percent in mole or less, and even more preferably 45 percent in mole or less.

Among such aromatic co-polymer polyesters, aromatic co-polymer polyesters from the polycondensation of dicarboxylic acid components having terephthalic acid as a main component and glycol components comprising 90 to 50 percent in mole, more preferably 80 to 60 percent, of which 75 to 65 percent in mole of ethylene glycol and 10 to 50 percent in mole, more preferably 20 to 40 percent in mole, of which 25 to 35 percent in mole of 1,4-cyclohexane dimethanol ("CHDM"), are particularly desirable.

Although the glass transition temperature (Tg) of aromatic co-polymer polyester is not limited in particular, 40 to 100°C is desirable, particularly 50 to 90°C is desirable, of which particularly 60 to 80°C, is desirable.

As concrete product examples of such aromatic co-polymer polyesters, for instance, "NOVAPEX" series (for instance, NOVAPEX PS600) manufactured by Mitsubishi Chemical Corporation, which is a modified body of polyethylene terephthalate, and "NOVADURAN" series (for instance, NOVADURAN 5008) manufactured by Mitsubishi Engineering Plastics Corporation, which is a modified body of polybutylene terephthalate, can be cited. In addition, "Eastar 6763" manufactured by Eastman Chemical Company, which is a polyester resin in which approximately 30 percent in mole of ethylene glycol in polyethylene terephthalate has been substituted with 1,4-cyclohexane dimethanol, similarly, "Eastar" series, starting with "Eastar GN119" comprising the same components with a rather low molten viscosity, can be cited.

Aromatic polyester series resin for which the viscosity after melt-mixing with lactic acid series polymer is within a range of 0.45 to 0.90 in terms of intrinsic viscosity (IV value) as measured with JIS K 7367-5 (2000) are desirable. If less than 0.45, the obtained sheet is fragile and not suitable for use. In addition, with those exceeding 0.90, the molecular weight is too high, requiring the melt-extrusion temperature to be set to 250°C or higher, and when melt-mixing with a lactic acid series polymer at a higher temperature than this, thermal decomposition of the lactic acid series polymer is a concern.

More desirable IV values are within a range of 0.5 to 0.8 and more preferably a range of 0.55 to 0.75.

Since the purposes of mixing an aromatic polyester series resin are, similarly to lactic acid series polymer, to obtain robustness after being turned into a card and to complement fuse-bonding ability with the over-sheet having an aromatic polyester series resin or the like as a main component while being turned into a card, or the like, it is necessary to adjust the mixing amount of aromatic polyester series resin according to such purposes. That is to say, although the proportion of aromatic polyester series resin is determined by the proportion of the thermoplastic elastomer contained, it is 70 parts in mass or less, preferably 60 parts in mass or less and more preferably 50 parts in mass or less, with respect to the total amount (100 parts in mass) of lactic acid series polymer, non-crystalline aromatic polyester series resin and thermoplastic elastomer. In order to bring out efficiently the high heat resistance of aromatic polyester series resin when compared to lactic acid series polymer, it is preferable that 15 parts in mass or more and particularly 20 parts in mass or more is contained, with respect to the above total amount (100 parts in mass).

### (Thermoplastic elastomer)

Thermoplastic elastomers are broadly separated into styrene series, olefin series, PVC series, polyester series, urethane series, amide series and the like; preferred as thermoplastic elastomers used for the base resin of core sheet (A) are polyester series elastomers, or, elastomers containing a polyester series elastomer as a main component and one species or two or more species of elastomers chosen from styrene series elastomers, acrylic series elastomers, polyolefin series elastomers or polyamide series elastomers and the like are mixed additionally. Among them, an elastomer containing a polyester series elastomer and a styrene series elastomer is particularly desirable.

Addition of a thermoplastic elastomer allows miscibility between lactic acid series polymer and aromatic polyester series resin to be raised, and in particular, the use of an elastomer comprising a mixture of polyester series elastomer and styrene series elastomer allows heat fuse-bonding ability with a sheet having an aromatic polyester series resin or the like as a main component to be raised advantageously.

A polyester series elastomer is a thermoplastic elastomer having a polyester series block co-polymer as a main component, desirable ones being block co-polymers having a high melting point, high crystallinity aromatic polyester as hard segment and a non-crystalline polyester or a non-crystalline polyether as soft segment.

As styrene series elastomers, those comprising a styrene component and an elastomer component and containing styrene component with a proportion of 10 to 50 percent in mass and particularly 15 to 30 percent in mass are desirable. As elastomer components in this case, for instance, conjugated diene series hydrocarbons such as butadiene, isoprene and 1,3-pentadiene may be cited, and more specifically, elastomer of styrene and butadiene copolymer (SBS), elastomer of styrene and isoprene co-polymer (SIS), and the like, may be cited. For instance, the "HYBRAR" series manufactured by Kuraray CO., LTD., and the like, may be cited.

In addition, resins comprising the above SBS elastomer or SIS elastomer added with hydrogen (SEBS, SEPS) can be also used. As concrete examples of elastomers added with hydrogen, for instance, "Tuftec H" series manufactured by Asahi Kasei Chemicals Corporation, and the like, may be cited.

Further in addition, modified styrene series elastomers in which elastomer component is contained in large quantities can be also used. Among them, modified bodies of the above-mentioned SEBS and SEPS are used more preferably. Concretely, maleic anhydride-modified SEBS, maleic anhydride-modified SEPS, epoxy-modified SEBS, epoxy-modified SEPS and the like may be cited, at least one species chosen from these groups is used.

As concrete examples of modified styrene series elastomer, "Tuftec M1943" manufactured by Asahi Kasei Chemicals Corporation and "DYNARON 8630P" manufactured by JSR, which are polymers modified with a highly reactive functional group into hydrogenated styrene series thermoplastic elastomers, "Epofriend" series manufactured by Daicel Chemical Industries, LTD. which is an epoxidized thermoplastic elastomer, and the like, may be cited.

Note that, as those elastomers in which a polyester series elastomer and a styrene series elastomer have been mixed, for instance resin compositions disclosed in Japanese patent No. 3381488 and Japanese patent No. 3702704 can be also used.

The mixing proportion of the above polyester series elastomer (c1) and the above styrene series elastomer (c2) is preferably c1:c2=100:0 to 20:80 in mass ratio, more preferably c1:c2=90:10 to 30:70 and particularly preferably 80:20 to 40:60.

MFR (melt-flow rate) of the thermoplastic elastomer is preferably 3 to 40 (5g/10 minute to 35g/10 minute), in which 5 to 35 (10g/10 minutes to 30g/10 minutes) and 10 to 30 (10g/10 minutes to 30g/10 minutes) of this, are more desirable.

Note that the value of MFR is a value measured according to JIS K-7210, under the conditions of 230°C, 21.2N load and 10 minutes.

Note that commercial products can be also used as thermoplastic elastomers. For instance, PRIMALLOY A1500, A1600, A1700, A1800, A1900 series, and the like, manufactured by Mitsubishi Chemical Corporation are commercially available, among which A1500, A1800, and the like, can be used preferably.

Since the main purposes of mixing a thermoplastic elastomer are to improve the impact resistance of lactic acid series polymer and to raise the miscibility between lactic acid series polymer and aromatic polyester series resin, and the like, it is necessary to adjust the mixing amount of thermoplastic elastomer according to such purposes.

That is to say, the proportion of thermoplastic elastomer is preferably 10 to 35 parts in mass and more preferably 15 to 30 parts in mass, with respect to the total amount (100 parts in mass) of lactic acid series polymer, non-crystalline aromatic polyester series resin and thermoplastic elastomer. If below 10 parts in mass, the sheet is fragile and in particular, it is sometimes easy for the card to break when embossing letters, and in addition, for chips and burrs to be generated when punching to card size. Meanwhile, if above 35 parts in mass, there is the possibility that the sheet becomes soft, decreasing significantly the robustness as a card.

### (Coloring material)

As coloring materials to be contained in the core sheet (A), for instance, organic colorants, inorganic colorants, and the like, can be cited. Among them, inorganic fillers with a refractive index of two or greater, for instance, titanium oxide, lead titanate, potassium titanate, zirconium oxide, zinc sulfide, antimony oxide, zinc oxide, and the like, are preferred, and among these, titanium oxide, which has a high refractive index, is particularly desirable.

Including a colorant with a high refractive index such as titanium oxide allows the core sheet (A) to be turned into an opaque white sheet and, for instance, if the inlet sheet (C) is layered so as to be sandwiched between core sheets (A), the antenna base or the like of the inlet sheet (C) can be concealed so it is not seen.

Anatase type, rutile type and brookite type exist for titanium oxide, and rutile type, which has a large refractive index, is used preferably.

Note that either titanium oxide fabricated by the chlorine method process or titanium oxide fabricated by the sulfuric acid method process can be used.

In addition, desirable titanium oxides are those with the surface thereof coat-treated with at least one species of inactivated inorganic oxide chosen from among silica, alumina and zirconia. Coat-treatment with inert inorganic oxide allows the photo-catalytic action of titanium oxide to be suppressed, which can prevent decomposition of lactic acid series polymer by the photo-catalytic action of titanium oxide during manufacturing and use.

In addition, in order to improve dispersability into the base resin, using titanium oxide in which the surface of titanium oxide has been surface-treated with at least one species of inorganic compound chosen from a siloxane compound, a silane coupling agent and the like, or at least one species of organic compound chosen from polyol and polyethyleneglycol, is all the more desirable.

The average particle diameter of titanium oxide is preferably 0.1 µm to 1 µm and more preferably 0.2µm to 0.5µm. If the average particle diameter of titanium oxide is in such ranges, excellent concealability can be conferred without decreasing the mechanical physical properties of the card.

The amount of titanium oxide contained is preferably 1 to 20 parts in mass, with respect to 100 parts in mass of the total mass of each core sheet (A), particularly 3 to 15 parts in mass is more desirable, of which particularly 5 to 10 parts in mass is even more desirable.

Mixing titanium oxide with such ranges can prevent the card interior from being exposed, allowing for a layered card having an excellent external appearance, without decreasing the mechanical strength of the layered card.

### (Other components)

In addition to the lactic acid series polymer and the coloring material, the lactic acid series resin composition and the lactic acid series resin layer constituting core sheet (A) may contain a mixed resin comprising a combination of at least one species or two or more species chosen from the group comprising, for instance, "aliphatic polyesters other than lactic acid series polymers", "aromatic aliphatic polyester series resins", "co-polymers of lactic acid series polymer and diol-dicarboxylic acid" and "methacrylic acid-containing elastic bodies with a glass transition temperature of 0°C or lower".

### (Aliphatic polyesters other than lactic acid series polymers)

As "aliphatic polyesters other than lactic acid series polymers", for instance, polyhydroxycarboxylic acids excluding lactic acid series polymers, aliphatic polyesters obtained by condensing an aliphatic diol and an aliphatic dicarboxylic acid, aliphatic polyesters obtained by ring-opening polymerization of cyclic lactones, synthesis system aliphatic polyesters, aliphatic polyesters biosynthesized inside micro-organisms, and the like, can be cited. Among them, those with a glass transition temperature of 0°C or lower are desirable. If the glass transition temperature is 0°C or lower, impact-absorbing capability at ordinary usage temperature is satisfactory, allowing an excellent impact resistance to be conferred.

Here, as the above "polyhydroxycarboxylic acid", homopolymers and co-polymers of hydroxycarboxylic acids such as 3-hydroxybutyric acid, 4-hydroxybutyric acid, 2-hydroxy-n-butyric acid, 2-hydroxy-3,3-dimethyl butyric acid, 2-hydroxy-3-methyl butyric acid, 2-methyl lactic acid and 2-hydroxy caproic acid, can be cited.

As the above "aliphatic polyesters obtained by condensing an aliphatic diol and an aliphatic dicarboxylic acid", polymers that can be obtained as the desired polymer (macromolecule) by selecting from among the aliphatic diols and aliphatic dicarboxylic acids described next and condensing respectively one species or two or more species, or by chain extension as necessary with an isocyanate compound or the like, can be cited. As the "aliphatic diols" in this case, ethylene glycol, propylene glycol, 1,4-butanediol, 1,4-cyclohexane dimethanol, and the like, can be cited representatively, and as the above "aliphatic dicarboxylic acids", succinic acid, adipic acid, suberic acid, sebacic acid and dodecane dioic acid, and the like, can be cited representatively.

As the above "aliphatic polyesters obtained by ring-opening polymerization of cyclic lactones", the cyclic monomers ε-caprolactone, δ-valerolactone, β-methyl-δ-valerolactone, and the like, the above "aliphatic polyesters obtained by ring-opening polymerization of cyclic lactones" can be cited representatively, and can be obtained by selecting and polymerizing one species or more from these.

As the above "synthesis system aliphatic polyesters", co-polymers or the like of cyclic acid anhydride and oxiranes, for instance, succinic anhydride and ethylene oxide, propionyl oxide or the like, can be cited.

As the above "aliphatic polyesters biosynthesized inside micro-organisms", aliphatic polyesters biosynthesized by acetyl-coenzyme A (acetylCoA) inside micro-organisms, starting with *alcaligenes eutrophus,* and the like, can be cited. Although this aliphatic polyester is mainly poly-β-hydroxybutyric acid (poly3HB), it is industrially advantageous for the sake of improving practical use properties as plastic, to co-polymerize valeric acid unit (HV) and have a poly(3HB-CO-3HV) co-polymer. In general, HV co-polymerization ratio is 0 to 40%. Longer chain hydroxyalkanoate may be also co-polymerized.

As representative products of "aliphatic polyesters other than lactic acid series polymers", the "Bionolle" series manufactured by Showa Highpolymer Co., Ltd., obtained by polymerizing succinic acid, 1,4-butanediol and adipic acid, "Celgreen" series manufactured by Daicel Chemical Industry LTD. obtained by ring-opening condensation of ε-caprolactone, can be cited.

### (Aromatic aliphatic polyester)

As "aromatic aliphatic polyester series resins", those in which crystallinity has been decreased by introducing an aromatic ring between aliphatic chains can be used. For instance, aromatic aliphatic polyester series resins obtained by condensing an aromatic dicarboxylic acid component, an aliphatic dicarboxylic acid component and an aliphatic diol component can be cited.

Here, as the above "aromatic dicarboxylic acid component", for instance, isophthalic acid, terephthalic acid, 2,6-naphthalene dicarboxylic acid, and the like, may be cited.

In addition, as the above "aliphatic dicarboxylic acid component", for instance, succinic acid, adipic acid, suberic acid, sebacic acid, dodecane dioic acid, and the like, may be cited.

In addition, as the above "aliphatic diol", for instance, ethylene glycol, 1,4-butanediol, 1,4-cyclohexane dimethanol, and the like, may be cited.

Among them, the most suitably used "aromatic dicarboxylic acid component" is terephthalic acid, "aliphatic dicarboxylic acid component" is adipic acid and "aliphatic diol component" is 1,4-butanediol.

Note that for the aromatic dicarboxylic acid component, the aliphatic dicarboxylic acid component or the aliphatic diol component, two species or more among those indicated above as examples may be used in combination.

As representative aromatic aliphatic polyesters, co-polymer of tetramethylene adipate and terephthalate, co-polymer of polybutylene adipate and terephthalate, and the like, may be cited.

As a product comprising a co-polymer of tetramethylene adipate and terephthalate, "Eastar Bio" manufactured by Eastman Chemical Company can be cited. In addition, as a product comprising a co-polymer of polybutylene adipate and terephthalate, "Ecoflex" manufactured by BASF can be cited.

### (Co-polymer of lactic acid series polymer and diol-dicarboxylic acid)

As "co-polymer of lactic acid series polymer and diol-dicarboxylic acid", random co-polymer, block co-polymer, graft co-polymer, and the like may be cited, and may be of any structure among these. In particular, from the points of impact resistance improving effects and transparency, block co-polymer and graft co-polymer are desirable.

As specific examples of random co-polymers, "GS Pla" series manufactured by Mitsubishi Chemical Corporation may be cited. As specific examples of block co-polymer, or, graft co-polymer, "PLAMATE" series manufactured by Dainippon Ink and Chemicals may be cited.

There is no particular limitation regarding the fabrication method for the co-polymer of lactic acid series polymer and diol-dicarboxylic acid, the obtaining method thereof whereby a polyester having a structure from the dehydration condensation of a diol and a dicarboxylic acid, or, a polyether polyol undergoes ring-opening polymerization, or, trans-esterification reaction with a lactide, and the obtaining method thereof whereby a polyester having a structure from the dehydration condensation of a diol and a dicarboxylic acid, or, a polyether polyol undergoes dehydration-deglycolation condensation or trans-esterification reaction with a lactic acid series polymer may be cited.

In so doing, as the above "diol component", with no particular limitation, straight chain diols such as ethylene glycol, 1,3-propanediol, 1,4-butanediol, 1,5-pentane diol, 1,6-hexane diol, 1,7-heptane diol, 1,8-octane diol, 1,9-nonane diol, 1,10-decane diol, 1,11-undecane diol and 1,12-dodecane diol, branched chain diols such as propylene glycol, 1,2-butanediol, 1,3-butanediol, 1,2-pentane diol, 1,3-pentane diol, 1,4-pentane diol, 2,3-pentane diol, 2,4-pentane diol, 1,2-hexane diol, 1,3-hexane diol, 1,4-hexane diol and 1,5-hexane diol, and polyols such as polyethylene glycol, polypropylene glycol, polybutylene glycol and polytetramethylene glycol, may be cited.

In addition, as the above "dicarboxylic acid component", with no particular restriction limitation, straight chain dicarboxylic acids such as succinic acid, adipic acid, suberic acid, azelaic acid, sebacic acid, nonane dicarboxylic acid, decane dicarboxylic acid, maleic acid, fumaric acid, citraconic acid, dodecane dicarboxylic acid and cyclohexane dicarboxylic acid, branched dicarboxylic acids such as methyl succinic acid, dimethyl succinic acid, ethyl succinic acid, 2-methyl glutaric acid, 2-ethyl glutaric acid, 3-methyl glutaric acid, 3-ethyl glutaric acid, 2-methyl adipic acid, 2-ethyl adipic acid, 3-methyl adipic acid, 3-ethyl adipic acid and methyl glutaric acid, and aromatic dicarboxylic acids such as phthalic acid, isophthalic acid, terephthalic acid, hexahydrophthalic acid, naphthalene dicarboxylic acid, phthalic anhydride, bisphenol A and biphenol, may be cited.

In addition, the co-polymer of lactic acid series polymer and diol-dicarboxylic acid can be adjusted to a given molecular weight using an isocyanate compound or carboxylic acid anhydride.

However, from the aspects of workability and durability, the weight average molecular weight of the co-polymer of lactic acid series polymer and diol-dicarboxylic acid is preferably in the range of 50,000 to 300,000 and more preferably a range of 100,000 to 250,000.

### (Methacrylic acid-containing elastic body with a glass transition temperature of 0°C or lower)

Since methacrylic acid has a satisfactory miscibility with lactic acid series polymers, by mixing an elastic body containing methacrylic acid in a lactic acid series polymer, the methacrylic acid-containing elastic body disperses finely within the lactic acid series polymer, which allows the impact resistance of the lactic acid series polymer to be improved efficiently. Above all, with a "methacrylic acid-containing elastic body" having a glass transition temperature of 0°C or lower, impact-absorbing capability at ordinary usage temperature is satisfactory, allowing an all the more excellent impact resistance to be conferred.

As concrete examples of "methacrylic acid-containing elastic body with a glass transition temperature of 0°C or lower", at least one species or more of elastic body chosen from methacrylic acid methyl-butadiene-styrene co-polymer, silicone/acrylic composite rubber-containing methacrylic acid methyl co-polymer, silicone/acrylic composite rubber-containing methacrylic acid methyl-styrene co-polymer, conjugated diene series rubber-containing methacrylic acid methyl-styrene co-polymer, acrylic series rubber-containing methacrylic acid methyl co-polymer, acrylic series rubber-containing methacrylic acid methyl-styrene co-polymer, and the like, can be cited.

As products of methacrylic acid-containing elastic body, "METABLEN" series S type, W type, E type, C type, and the like, manufactured by Mitsubishi Rayon Co.,Ltd., may be cited.

### (Carbodiimide compound)

The lactic acid series resin composition and lactic acid series resin layer constituting core sheet (A) may contain a carbodiimide compound. Mixing a carbodiimide compound allows the durability of the present layered card to be improved.

As carbodiimide compounds, those having a basic structure of the following General Formula (1) may be cited:

(1) -(N=C=N-R-)n-

(where n represents an integer of 1 or greater; R represents other organic system bond unit; for these carbodiimide compounds, the R portion may be any from aliphatic, alicyclic and aromatic) In general, n is suitably determined between 1 and 50.

Specifically, for instance, bis(dipropyl phenyl)carbodiimide, poly(4,4'-diphenylmethane carbodiimide), poly(p-phenylene carbodiimide), poly(m-phenylene carbodiimide), poly(tolyl carbodiimide), poly(diisopropylphenylene carbodiimide), poly(methyl-diisopropylphenylene carbodiimide), poly(triisopropyl phenylene carbodiimide) and the like, and, monomers thereof, may be cited. The carbodiimide compounds can be used alone, or, by combining two or more species.

For the mixing amount of carbodiimide compound, with respect to 100 parts in mass of the total mass of each core sheet (A), a proportion of 0.5 to 5 parts in mass for mixing is desirable, particularly a proportion of 1 to 4 parts in mass for mixing is more desirable, of which particularly a proportion of 1.5 to 3 parts in mass for mixing is even more desirable.

Mixing the carbodiimide compound with such ranges can prevent the card interior from being exposed, allowing for a layered card having an excellent external appearance, without decreasing the mechanical strength of the present layered card.

Note that the lactic acid series resin composition and lactic acid series resin layer constituting core sheet (A) may contain components other than those described above, for instance, additives such as heat stabilizer, antioxidant, flame retardant, UV absorbent, light stabilizer, nuclear agent, plasticizer, colorant and dye, in such a range that the effects of the present invention are not lost.

### [Over-sheet (B)]

The over-sheet (B) can be formed as a single layer sheet of a layer having as a main component resin (also referred to as base resin) an aromatic polyester series resin or a polycarbonate series resin or a mixed resin of these both.

### (Aromatic polycarbonate series resin)

As aromatic polycarbonate series resins, those fabricated from bisphenol A by the interfacial polymerization method, the trans-esterification method, the pyridine method and the like, polyester carbonates obtained by copolymerization of bisphenol A and a dicarboxylic acid derivative, for instance, tere(iso)phthalic acid dichloride or the like, and those obtained by polymerization of a bisphenol A derivative, for instance, tetramethylene bisphenol A, or the like, may be cited.

As concrete examples of aromatic polycarbonate series resins, "IUPILON" series manufactured by Mitsubishi Engineering Plastics Corporation, "Calibre" series manufactured by Sumitomo Dow Ltd., and the like, may be cited.

### (Aromatic polyester series resin)

As aromatic polyester series resins, resins from the condensation polymerization of an aromatic dicarboxylic acid component and a diol component may be cited.

Here, as representatives of the above "aromatic dicarboxylic acid component", terephthalic acid, isophthalic acid, naphthalene dicarboxylic acid, and the like, may be cited, and a portion of the terephthalic acid may have been substituted with "other dicarboxylic acid component".

In so doing, as "other dicarboxylic acid component", oxalic acid, malonic acid, succinic acid, adipic acid, azelaic acid, sebacic acid, neopentylic acid, isophthalic acid, naphthalene dicarboxylic acid, diphenylether dicarboxylic acid, p-oxybenzoic acid, and the like, may be cited. These may be one species or a mixture of two or more species, and in addition, the amount of other dicarboxylic acids substituted can be also selected suitably.

As representatives of the above "diol component", ethylene glycol, diethylene glycol, triethylene glycol, cyclohexane dimethanol, and the like, may be cited, and a portion of ethylene glycol may be substituted with "other diol component".

In so doing, as "other diol component", propylene glycol, trimethylene glycol, tetramethylene glycol, hexamethylene glycol, diethylene glycol, neopentyl glycol, polyalkylene glycol, 1,4-cyclohexane dimethanol, glycerin, pentaerythritol, trimethylol, methoxy polyalkylene glycol, and the like, may be cited. These may be one species or a mixture of two or more species, and in addition, the amount of other diols substituted can be also selected suitably.

As "aromatic polyester series resins", concretely, polyethylene terephthalate from the condensation polymerization of terephthalic acid and ethylene glycol, polybutylene terephthalate from the condensation polymerization of terephthalic acid or dimethyl terephthalate and 1,4-butanediol, and the like are desirable from the point of view of costs; however "co-polymer polyesters" containing other dicarboxylic acid component than terephthalic acid and/or other diol component than ethylene glycol can be used.

As the "co-polymer polyesters", co-polymer polyesters from the condensation polymerization of a dicarboxylic acid component in which 60 percent in mole or more of dicarboxylic acid component is terephthalic acid and the remaining dicarboxylic acid component has been substituted with other dicarboxylic acid component, and a diol component in which 60 percent in mole or more of the diol component is ethylene glycol and the remaining diol component has been substituted with other diol component, may be cited.

Note that the aromatic polyester series resin used in the present layered card may be a mixture of polyethylene terephthalate and the co-polymer polyester described above.

However, attention is required when using the co-polymer polyester, as variations in the glass transition temperature and elongation modulus of the sheet are large depending on the selection and the contained amount, and the like, of the co-polymer component.

As concrete exemplary products of the above aromatic polyester series resins, for instance, "NOVAPEX" series manufactured by Mitsubishi Chemical Corporation, which is a polyethylene terephthalate, "NOVADURAN" series manufactured by Mitsubishi Engineering Plastics Corporation, which is a polybutylene terephthalate, and the like, can be cited. In addition, "PETG" series manufactured by Eastman Chemical Company, which is a polyester resin in which approximately 30 percent in mole of ethylene glycol in polyethylene terephthalate has been substituted with 1,4-cyclohexane dimethanol, and the like, can be cited.

### (Mixed resin of aromatic polyester series resin and polycarbonate series resin)

As mixed resins of aromatic polyester series resin and polycarbonate series resin, those with a mixing ratio of aromatic polyester series resin and polycarbonate series resin comprising a mass ratio of 0:100 to 50:50, particularly 0:100 to 40:60, of which particularly 0:100 to 30:70 are desirable.

In applications that do not require chemical resistance, the proportion of aromatic polyester may be an extremely small amount, while in applications requiring chemical resistance, suitably mixing aromatic polyester series resin with 40 percent in mass as the upper limit is desirable. If in such ranges, chemical resistance can be improved while conferring excellent heat resistance, forming processability and impact resistance.

Note that, in the over-sheet (B), as necessary, additives such as coloring agent, lubricant, filler and impact improving agent can be included, and, different species of polymer to improve physical properties can be blended.

In particular, for cards engraved with letters by an embosser, such as credit cards, blending of a polymer that decreases the tensile strength, such as polybutylene terephthalate, is desirable.

### [Inlet sheet (C)]

Inlet sheet (C) can be constituted by implementing electronic parts such as IC chip and capacitor on a support consisting of resin, for instance a support with an antenna circuit formed, as shown in Fig. 2 (1) (2).

As support of the inlet sheet, for instance, a single layer sheet having as a main component any resin from polyethylene terephthalate (PET), polybutylene terephthalate (PBT), polyethylene naphthalate (PEN), polyphenylene sulfide (PPS), polyimide (PI), amorphous polyethylene terephthalate (APET), polypropylene (PP), polyethylene (PE), polycarbonate (PC), acrylonitrile-butadiene-styrene (ABS), polyvinyl chloride (PVC) resin, lactic acid series polymer, and the like, or a mixed resin comprising two or more species of resins among these, or, a layered sheet with the single layer sheet serving as the middle layer, laid on the surface thereof are adhesive layers, or the like, having a resin provided with adhesiveness such as polyolefin series resin as a main component can be used.

Note that, when the point of heat resistance is considered, it is desirable to form the middle layer of the support from a resin composition having as a main component at least one species chosen from the group comprising polycarbonate series resin, substantially non-crystalline aromatic polyester series resin and polymer alloy series resins thereof.

With antenna coil, IC chip and the like serving as one set, it suffices to place multiple sets of IC chip and the like over the resin layer at equal interval, taking into consideration the desired card size and the like.

In addition, for the antenna coil of the antenna circuit, the wire diameter and the number of winding turns of the coil are suitably selected according to how the card is used.

### [Adhesive layer (D) ]

As adhesive layer, thermosetting-type adhesives such as epoxy resin series, phenol resin series and silicone series, dry laminate adhesives such as cyanoacrylate series, polyurethane series and acrylic series, hygroscopic curing-type adhesive, ultraviolet curing-type adhesive, and the like, can be used.

### [Plant raw material plastic ratio]

In the present layered card, for 20 to 80 percent in mass of the total plastic raw material to be occupied by the plant raw material plastic is desirable, particularly 25 to 80 percent in mass to be occupied is more desirable, of which particularly 30 to 80 percent in mass to be occupied is even more desirable.

Note that as plant raw material plastic, polybutylene succinate and the like may be cited in addition to lactic acid series polymer.

### [Thickness]

Although the thickness of the present layered card is different depending on the application, in general, 50µm to 900µm is desirable.

The thickness of the core sheet (A) (if comprising two or more sheets, the total thickness thereof) is preferably on the order of 250µm to 800µm for thick ones and 25µm to 250µm for thin ones, with no particular limitation.

The thickness of the over-sheet (B) (if comprising two or more sheets, the total thickness thereof) is preferably on the order of 20µm to 140µm for thick ones and 20µm to 100µm for thin ones, with no particular limitation.

The thickness of the inlet sheet (C) is preferably on the order of 10µm to 100µm, with no particular limitation.

The thickness ratio of the core sheet (A) (if comprising two or more sheets, the total thickness ratio thereof) with respect to the overall thickness of the present layered card is preferably 20 to 80% and even more preferably 30 to 80%.

The thickness ratio of the over-sheet (B) (if comprising two or more sheets, the total thickness ratio thereof) with respect to the overall thickness of the present layered card is preferably 5 to 50%, more preferably 10 to 40% and even more preferably 15 to 35%. Providing layers in these ranges allow excellent heat resistance and impact resistance to be conferred suitably.

### [Fabrication]

Hereinafter, fabrication method for the present layered card will be described; however the fabrication method of the present layered card is not limited to the methods described hereinafter.

### (Core sheet (A))

As fabrication method of core sheet (A), lactic acid series polymer and, as necessary, other resins such as non-crystalline aromatic polyester series resin and thermoplastic elastomer, and, as necessary, other additives such as coloring material may be introduced together into an extruder to fabricate a sheet directly, in addition, those may be also first extruded into strand-shape and cut into pellets, then, re-introduced into an extruder to fabricate a sheet.

A more detailed description will be given below.

First, it is desirable that the above raw materials are dried thoroughly to eliminate moisture and then melted with the extruder, taking into consideration the decrease in molecular weight by decomposition of resin inside the extruder.

The melt-extrusion temperature is preferably selected suitably taking into consideration the melting temperature and composition of the resin. In general, the setting is preferably within the range of 160 to 230°C for aliphatic polyesters (including lactic acid series polymers), aromatic aliphatic polyesters, and, co-polymers of lactic acid series polymer and diol-dicarboxylic acid.

It suffices that the resin composition melt-formed into sheet-form is brought into contact with a rotating casting drum and cool-solidified to be turned into a cast sheet.

In so doing, the temperature of the casting drum is preferably adjusted depending on the type and composition of the resin, and in general, a setting of 60°C or lower is desirable. At higher temperature than this, there is the possibility that the resin composition sticks to the casting drum and cannot be torn off.

If the sheet is to be stretched, it is desirable to render the sheet substantially non-crystalline by rapid cooling so that spherocrystals do not develop by the crystallization being promoted, of the lactic acid series polymer and the aromatic polyester series compound.

The obtained cast sheet may be stretched or heat-treated, as necessary.

In such a case, the stretch ratio of the sheet is preferably 1.5- to 5-fold, and particularly 2- to 4-fold each in the vertical (long) direction and the horizontal (width) direction.

It is desirable to select the stretching temperature in a range of glass transition temperature of each resin +5°C to +30°C, particularly +10°C to +25°C, of which particularly +15°C to +20°C.

It suffices to carry out the stretching process by roll-stretching, which stretches a sheet between two rolls with a peripheral speed difference, and/or, by tenter-stretching, which uses a tenter, gripping the sheet with clips, stretching by widening the row interval of the clip rows. When stretching along two axes, either simultaneous biaxial stretching method or sequential stretching method is adequate.

With the tenter-stretching method, after the sheet has been stretched with the tenter, heat treatment (heat fixation) is possible inside the tenter, thus, it is advantageous when heat treatment (heat fixation) is carried out.

For heat treatment (heat fixation), for instance, heat-treating in a temperature range of glass transition temperature +30°C to crystal melting temperature -20°C, for three seconds or longer is desirable. By heat-treating (heat fixing) in this way, heat-shrinkability of the sheet can be controlled (suppressed).

### (Over-sheet (B))

As fabrication method of over-sheet (B), an aromatic polycarbonate series resin, an aromatic polyester series compound, or, mixtures thereof and other additives may be introduced together into an extruder to fabricate a sheet directly, in addition, those may be also first extruded into strand-shape and cut into pellets, then, re-introduced into an extruder to fabricate a sheet.

A detailed description will be given below.

First, it is desirable that the above raw materials are dried thoroughly to eliminate moisture and then melted with the extruder, taking into consideration the decrease in molecular weight by decomposition of resin inside the extruder.

The melt-extrusion temperature is preferably selected suitably taking into consideration the melting temperature and composition of the resin. In general, the setting is preferably within the range of 260 to 310°C for aromatic polycarbonate series resins and aromatic polyester series resins.

It suffices to conduct formation, stretching and heat treatment of the cast sheet similarly to core sheet (A).

### (Inlet sheet (C))

As fabrication method of inlet sheet (C), it suffices to form the inlet sheet (C), for instance, by laminating (heat-fusion bonding) and etching a metal foil on the surface of a support forming resin sheet to form an antenna circuit, then, implementing an IC chip in the support at the same time as connecting to the antenna circuit.

In so doing, as the metallic thin film to be used, aluminum foil, copper foil, gold foil, silver foil, zinc foil, nickel foil, tin foil, alloy foil, and the like, may be cited.

The antenna circuit can be also formed by embedding a wound wire coil into the support by heat or ultrasound, or by printing a circuit pattern on the support using a conductive paste.

In addition, the IC chip and the like can be implemented on the antenna circuit by bonding method or the like.

### (Layering method)

A layered card can be fabricated by stacking a core sheet (A), an over-sheet (B), and as necessary an inlet sheet (C) in a given layering order, heat fusion bonding by applying pressure under heat in a press machine for binding between the sheets, and then, after cooling to room temperature, punching into a card shape.

For instance, a card can be fabricated by sandwiching an inlet sheet (C) between the above core sheets (A) (A), furthermore, stacking over-sheets (B) (B) on the front and back sides thereof ((B)/(A)/(C)/(A)/(B)), heat fusion bonding by applying pressure under heat in a press machine for binding between the sheets, and then, after cooling to room temperature, punching into a card shape.

In addition to the heat-press method such as described above, well known sheet layering methods such as dry lamination and wet lamination can be adopted as layering methods.

Printing and other well known process can be performed on the core sheet (A) or the over-sheet (B), according to the type of card to be fabricated.

For instance, printing pictures, character information and the like, on one side or both sides of the core sheet (A) or the over-sheet (B) is optional.

In addition, providing an information memorization section such as a magnetic recording layer on one side or both sides of the core sheet (A) or the over-sheet (B) is also optional. In so doing, as information memorization sections, in addition to the above inlet sheet (C) and magnetic recording layer, thermosensitive layer, heat-sensitive rewrite layer, optical recording layer, hologram layer, electric discharge recording layer, bar-code, micro processor and semiconductor memories such as RAM and ROM, other IC chips, and the like, may be cited.

In addition, engraving characters and the like by embossing for embossed display is also optional.

When binding each space between the sheets via an adhesive or an adhesive layer, it suffices to use the resin as well-known resin having adhesive or adhesiveness. For instance, one species or a mixed resin or co-polymer comprising a combination of two or more species selected from the group of polyolefin, polyester, polystyrene, vinyl acetate resin, vinyl chloride resin, acrylic resin, olefin series resin, diene series resin, polyester series resin, epoxy resin, vinyl butyral resin, urethane resin, polyamide series resin, alkyd resin, melamine series resin, urea series resin, phenol formalin series resin, petroleum resin, maleic acid co-polymer, and the like, can be used, preferably, taking a plant raw material plastic as the raw material is desirable. In addition, it is also desirable to mix the main components of the two sheets to be bonded to serve as an adhesive layer.

As plant raw material plastic used as the raw material of the adhesive or the adhesive layer, for instance starch paste, soybean paste, natural rubber, gelatin, glue, alginic acid series resin, abietin series resin, cellulose derivative series resin, lactic acid series polymer, succinate series resins such as polyethylene succinate and polybutylene succinate series, can be cited.

### <Second embodiment, which is the subject-matter of the invention>

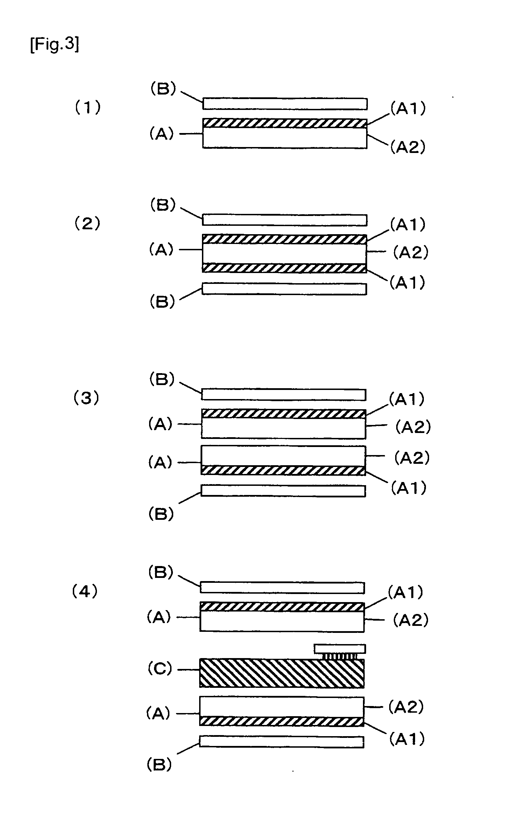

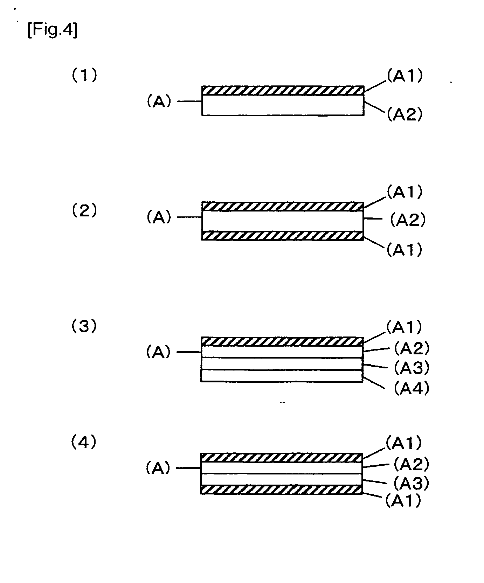

The layered card of the invention comprises, in the layered card, each core sheet (A) formed from two layers or more of a layered sheet, as shown in Fig. 3 and Fig. 4. The other points are the same as for the layered card of the first embodiment.

That is to say, the core sheet (A) in the layered card of the invention can be constituted from, for instance, an (A1) layer on the over-sheet (B) side and a layer other than the (A1) layer ((A2) layer, (A3) layer···), and at least one layer among them is formed from a lactic acid series resin layer comprising a lactic acid series resin composition having a lactic acid series polymer as a main component resin (also referred to as base resin), or, a lactic acid series resin layer comprising a lactic acid series resin composition having as a main component resin (also referred to as base resin) a lactic acid series polymer, a non-crystalline aromatic polyester series resin and a thermoplastic elastomer.

In addition, two or more layers may be formed as a lactic acid series resin layer comprising a lactic acid series resin composition having a lactic acid series polymer as a main component resin (also referred to as base resin), or, a lactic acid series resin layer comprising a lactic acid series resin composition having as a main component resin (also referred to as base resin) a lactic acid series polymer, a non-crystalline aromatic polyester series resin and a thermoplastic elastomer.

In addition, for the (A1) layer on the over-sheet (B) side, in view of the adhesiveness (including heat fuse-bonding ability) to the over-sheet (B), the (A1) layer is a layer having as a main component resin an "aromatic polyester series resin" or a "polycarbonate series resin" or a "mixed resin of these both".

In so doing, resins described in the first embodiment can be used for the "aromatic polyester series resin" and the "polycarbonate series resin".

In addition, in the case of the above "mixed resin of these both", the mixing ratio of "aromatic polyester series resin" and "polycarbonate series resin" is the same as the ratio described in the first embodiment, and when the adhesiveness (including heat fuse-bonding ability) to the over-sheet (B) is considered, a resin similar to the over-sheet (B) is desirable, thus one with close a mixing ratio is desirable.

### [Layers other than (A1) layer]

(A2) layer, which is at least one layer other than the (A1) layer among the layers constituting core sheet (A), is a lactic acid series resin layer having a lactic acid series polymer as a main component resin, and is preferably a lactic acid series resin layer having as a main component resin a lactic acid series polymer in which the proportion of D-lactic acid is 2% or less or 98% or more.

In this case, as the "lactic acid series polymer in which the proportion of D-lactic acid is 2% or less or 98% or more" is one in which the proportion of D-lactic acid and L-lactic acid is L isomer:D isomer=98:2 to 100:0 or L isomer:D isomer=2:98 to 0:100 in the lactic acid series polymer used in the base resin of the core sheet (A) of the first embodiment, one in which L isomer:D isomer=99:1 to 100:0 or L isomer:D isomer=1:99 to 0:100 being more desirable, and one in which L isomer:D isomer=99.5:0.5 to 100:0 or L isomer:D isomer=0.5:99.5 to 0:100 particularly desirable.

Such a lactic acid series polymer demonstrates high crystallinity, high melting point, and excellent heat resistance and mechanical physical properties. Thus, when a film is stretched or heat-treated, the resin crystallizes, allowing heat resistance and mechanical physical properties to be improved.

### [Layered constitution]

When forming a core sheet (A) from such (A1) layer and (A2) layer as those described above, for instance, one sheet of core sheet (A) can be formed by layering in the (A1)/(A2), (A1)/(A2)/(A1) and the like order from the over-sheet (B) side.

A non-crystalline aromatic polyester series resin and a thermoplastic elastomer can be mixed in both (A1) layer and (A2) layer.

That is to say, both (A1) layer and (A2) layer can be formed as a lactic acid series resin layer having as a main component resin a lactic acid series polymer, a non-crystalline aromatic polyester series resin and a thermoplastic elastomer.

In so doing, a proportion of aromatic polyester series resin within the resin composition constituting the (A1) layer that is greater than the proportion of aromatic polyester series resin within the resin composition constituting the (A2) layer is desirable, of which, a proportion of aromatic polyester series resin within the resin composition constituting the (A1) layer that is 20 to 40 parts in mass greater than the proportion of aromatic polyester series resin within the resin composition constituting the (A2) layer is desirable, and particularly 25 to 35 parts in mass greater is particularly desirable.

In addition, it is desirable, regarding the (A1) layer, that the preparation is such that the total amount of aromatic polyester series resin and thermoplastic elastomer is more than the [amount of] lactic acid series polymer, and conversely, for the (A2) layer, the preparation is such that the total amount of aromatic polyester series resin and thermoplastic elastomer is less than the [amount of] lactic acid series polymer. If formed in this way, the fuse-bonding ability to a sheet comprising aromatic polyester series resin or the like can be increased further.

Further in addition, emphasis on fuse-bonding ability to a sheet comprising aromatic polyester series resin or the like, the (A2) layer may have a composition in which the aromatic polyester series resin occupies 50 percent in mass or more, preferably 60 percent in mass or more, and more preferably 80 percent in mass or more.

### [Thickness ratio]

In each core sheet (A) comprising two or more layers, the proportion that each (A1) layer occupies in the total thickness of each core sheet (A) is preferably 3 to 50% and more preferably 5 to 30%.

In addition, the proportion that a layer other than the (A1) layer occupies in the total thickness of each core sheet (A) is preferably 50 to 97%, and more preferably 70 to 95%.

### [Fabrication method]

The core sheet (A) comprising two or more layers can be formed, for instance, by a co-extrusion method whereby the resin composition of each layer is co-extruded and layered, or, an extrusion lamination method whereby each layer is formed into a film shape and this is laminated, or a heat press-bonding method whereby each layer is formed into a film shape and these layers are heat press-bonded.

In the case of a layered body with three or more layers, forming is also possible by a method whereby two layers are formed by the co-extrusion method and this is laminated with a film formed separately.

From the aspect of productivity and cost, adopting the co-extrusion method is particularly desirable.

Describing more specifically this co-extrusion method (2 species, 3 layers as an example), a 2 species, 3 layers core sheet (A) can be formed by forming the resin composition of each layer as necessary into pellet form, introducing each into each hopper of two extruders coupled with a shared T die and melting at a temperature in the range of 200°C to 300°C, merging the resin of each layer for instance into 2 species, 3 layers at the feed block or manifold outlet, and solidifying by cooling with a cooling roll or the like.

Optionally, the layered card is one in which each over-sheet (B) in the layered card of the above embodiment of the invention is formed from a layered sheet comprising two or more layers. The other points are the same as for the layered cards of the first embodiment and second embodiment.

For instance, constitution is possible from a (B1) layer comprising a resin composition having as a main component resin (also referred to as base resin) an aromatic polyester series resin or a polycarbonate series resin or a mixed resin of these both, and a layer other than (B1 layer) (B2 layer, B3 layer).

For instance, it is possible to form (B1) layer with an aromatic polyester series resin as a main component resin, while forming (B2) layer with a polycarbonate series resin as a main component resin.

In so doing, over-sheet (B) can be formed, for instance, by layering in the (B1)/(B2), (B2)/(B1), (B1)/(B2)/(B1), (B2)/(B1)/(B2) and the like order from the core sheet (A) side.

In addition, it is possible to form (B1) layer with a mixed resin of an aromatic polyester series resin and a polycarbonate series resin as a main component resin, while forming (B2) layer with an aromatic polyester series resin as a main component resin.

In so doing, over-sheet (B) can be formed, for instance, by layering in the (B1)/(B2), (B2)/(B1), (B1)/(B2)/(B1), (B2)/(B1)/(B2) and the like order from the core sheet (A) side.

In addition, it is possible to form (B1) layer with a mixed resin of an aromatic polyester series resin and a polycarbonate series resin as a main component resin, while forming (B2) layer with a polycarbonate series resin as a main component resin.

In so doing, over-sheet (B) can be formed, for instance, by layering in the (B1)/(B2), (B2)/(B1), (B1)/(B2)/(B1), (B2)/(B1)/(B2) and the like order from the core sheet (A) side.

Here, the resins described in the first embodiment can be used for the "aromatic polyester series resin" and the "polycarbonate series resin".

In addition, the mixing ratio of aromatic polyester series resin and polycarbonate series resin is also the same as the ratio described in the first embodiment.

### [Thickness ratio]

In each over-sheet (B) comprising two or more layers, the proportion that each (B1) layer occupies in the total thickness of each over-sheet (B) is preferably 3 to 50% and more preferably 5 to 30%.

Conversely, the proportion that a layer other than the (B1) layer occupies in the total thickness of each over-sheet (B) is preferably 50 to 97%, and more preferably 70 to 95%.

### [Fabrication method]

The over-sheet (B) comprising two or more layers can be formed, for instance, by a co-extrusion method whereby the resin composition of each layer is co-extruded and layered, or, an extrusion lamination method whereby each layer is formed into a film shape and this is laminated, or, a heat press-bonding method whereby each layer is formed into a film shape and these layers are heat press-bonded.

In the case of a layered body with three or more layers, forming is also possible by a method whereby two layers are formed by the co-extrusion method and this is laminated with a film formed separately.

From the aspect of productivity and cost, adopting the co-extrusion method is particularly desirable.

Describing more specifically this co-extrusion method (2 species, 3 layers as an example), a 2 species, 3 layers over-sheet (B) can be formed by forming the resin composition of each layer as necessary into pellet form, introducing each into each hopper of two extruders coupled with a shared T die and melting at a temperature in the range of 200°C to 300°C, merging the resin of each layer for instance into 2 species, 3 layers at the feed block or manifold outlet, and solidifying by cooling with a cooling roll or the like.

### <Explanation of terms>

In the present invention, unless otherwise specified, "main component resin" includes the meaning of allowing containing another resin composition in a range that does not impede the functions of the main component resin. In such a case, although not to specify the proportion of the main component resin contained, it is desirable that the main component resin (when two components or more are main component resins, the total amount thereof) occupies 50 percent in mass or more within the composition, particularly 70 percent in mass or more, of which particularly 90 percent in mass or more (contains 100%).

In addition, a "sheet" in general, as per definition in JIS, refers to a product that is thin and flat which thickness is small considering the length and the width, and a "film" in general refers to a thin and flat product which thickness is extremely small compared to the length and width, the maximum thickness being arbitrarily limited, and one that is commonly supplied as in the form of a roll (Japanese industry specification JIS K6900). However, the line between sheet and film not being determined, and since there is no need in the present invention to distinguish the two in wording, it is deemed in the present invention that "sheet" is included even when referring to "film", and that "film" is included even when referring to "sheet".

Note that, the expression "X to Y" (X and Y are arbitrary numbers) in the present specification, unless expressly stated otherwise, includes the meanings of "preferably greater than X" and "preferably less than Y" along with the meaning of "X or greater and Y or less".

### [Example]

Hereinafter, the present invention will be described more concretely showing examples; however, the present invention is not to be limited by these, and a variety of applications are possible within a range that does not depart from the technical teachings of the present invention.

Note that measurement value and evaluations shown in the examples were conducted as indicated in the following.

### (1) Heat resistance

As evaluation of heat resistance, alteration and shrinkability of the card surface when immersed in hot water at 60°C for 5 minutes were observed and evaluated according to the standards for credit card with magnetic stripe JIS X6310. Furthermore, similar observation and evaluation were conducted in hot water at 80°C.

As evaluation criteria, those in which no alteration was observed on the card surface as well as no shrinkage was observed at both temperatures were evaluated as "O(circle)", and those in which either alteration was observed on the card surface or shrinkage was observed at either temperature were evaluated as "× (cross)".

### (2) Impact resistance

As evaluation of impact resistance, impact strength was measured according to the standards for credit card with magnetic stripe JIS X6310.

A card was placed on a hard horizontal board, and breaks, cracks and the like of the card were observed when a 500g steel ball was dropped thereon from a height of 30cm.

Those in which no break and crack occur were evaluated as "O(circle)" and those in which a break or a crack occur were evaluated as "× (cross)".

### (3) Fuse bonding ability of each layer

A card was incised, each space between the sheets was detached by gripping with nails and pulled from there with both hands, and the detachment conditions were visually observed and evaluated.

As evaluation criteria, the evaluation was "O (circle)" for those fuse-bonded robustly and "Δ (triangle)" for those somewhat weakly, and "× (cross)" for those that could be detached readily.

### (4) Overall evaluation

The evaluation was overall "× (cross)" for those in which one item or more had a "× (cross)" evaluation in the evaluation results from the above (1) to (3), overall "Δ (triangle)" for those in which there was no "× (cross)" but one item or more had a "Δ (triangle)" evaluation, and overall "O (circle)" for those in which not one item had "Δ (triangle)" or "× (cross)" evaluations.

Note that, those evaluated "× (cross)" in the overall evaluation can be evaluated as ones having low practical applicability, those evaluated with "Δ (triangle)" as ones having practical applicability, and those evaluated overall with "O (circle)" as ones having high practical applicability.

### [Core sheet A(1)]

Using NW4060D manufactured by Nature Works LLC (weight average molecular weight: 220,000; proportion in mass of D-lactic acid: 12%; proportion in mass of L-lactic acid: 88%) as a lactic acid series polymer in which the proportion of D-lactic acid is 5% or more and NW4032D manufactured by Nature Works LLC (weight average molecular weight: 230,000; proportion in mass of D-lactic acid: 1.4%; proportion in mass of L-lactic acid: 98.6%) as a lactic acid series polymer in which the proportion in mass of D-lactic acid is 2% or less, NW4060D and NW4032D were dry-blended with a proportion of 30:70 mass ratio, dried thoroughly to eliminate moisture and extruded using a T-die extruder at 210°C cylinder temperature and 200°C dice temperature onto a cooling roll at 58°C surface temperature to obtain a 700µm-thick sheet. This sheet was pre-heated with a metal roll, then, while being heated with an infrared heater, stretched 2.5-fold longitudinally at 75°C between rolls with a peripheral speed difference, next, horizontally stretched 3.0-fold at 72°C with a tenter, and then heat-treated inside the tenter (heat treatment temperature: 140°C; heat treatment time: 10 seconds) to obtain a 100µm-thick sheet.

### [Core sheet A(2)]

The aromatic polyester and thermoplastic elastomer described below were further mixed to NW4060D and NW4032D. NW4060D, NW4032D, non-crystalline aromatic polyester and thermoplastic elastomer were blended with a mass proportion of 20:10:60:10, extruded using a T-die extruder at 210°C cylinder temperature and 200°C dice temperature onto a cooling roll at 60°C surface temperature to obtain a 240µm-thick, non-stretched sheet.

### (Non-crystalline aromatic polyester)

An aromatic polyester, comprising carboxylic acid monomer unit: 100 percent in mole terephthalic acid, and glycol monomer unit: 68 percent in mole ethylene glycol and 32 percent in mole 1,4-cyclohexane dimethanol, with glass transition temperature (Tg): 78°C and 0.67dl/g intrinsic viscosity (measurement conditions: JIS K7367-5), was used.

### (Thermoplastic elastomer)

A thermoplastic elastomer in which a polyester series elastomer comprising a block co-polymer comprising a polybutylene terephthalate component and a polytetramethylene glycol component co-polymerized with a proportion of 67:33 in molar ratio, and a styrene series elastomer comprising a styrene-butadiene block co-polymer have been mixed at 74:26 mass ratio, was used.

### [Core sheet A(3): A(3-1)/A(3-2)]

NW4032D for core sheet A(3-1) and NW4060D for core sheet A(3-2) were respectively dried thoroughly to eliminate moisture, respectively introduced in separate extruders, and extruded at 210°C cylinder temperature and 200°C dice temperature from a 2 species, 2 layers multi-die onto a cooling roll at 55°C surface temperature to obtain a 700µm-thick, 2 species, 2 layers (A(3-1)/A(3-2)) sheet.

This sheet was pre-heated with a metal roll, then, while being heated with an infrared heater, stretched 2.5-fold longitudinally at 75°C between rolls with a peripheral speed difference, next, stretched 3.0-fold at 72°C in the horizontal direction with a tenter, and then heat-treated inside the tenter (heat treatment temperature: 140°C; heat treatment time: 10 seconds) to obtain a 100µm-thick sheet.

The thickness ratio A(3-1):A(3-2) was 1:9.

### [Core sheet A(4): A(4-2)/A(4-1)/A(4-2)]

W4060D and NW4032D blended with a proportion of 50:50 mass ratio were used for core sheet A(4-1), an aromatic polycarbonate series resin (NOVAREX 7022 manufactured by Mitsubishi Engineering Plastics Corporation, aromatic polycarbonate, weight average molecular weight: 50,000) and an aromatic polyester series resin (NOVADURAN 5020S, manufactured by Mitsubishi Engineering Plastics Corporation; homopolybutylene terephthalate, weight average molecular weight: 110,000) blended at 60:40 mixing mass ratio were used for core sheet A(4-2), respectively dried thoroughly to eliminate moisture, introduced respectively into separate extruders and extruded from a 2 species, 3 layers multi-die at 210°C cylinder temperature and 200°C dice temperature onto a cooling roll at 60°C surface temperature to obtain a 240µm-thick, 2 species, 3 layers (A(4-2)/A(4-1)/A(4-2)) non-stretched sheet.

The thickness ratio A(4-2):A(4-1):A(4-2) was 1:8:1.

### [Over-sheet B(1)]

NOVAREX 7022 manufactured by Mitsubishi Engineering Plastics Corporation (aromatic polycarbonate, weight average molecular weight: 50,000) was used as an aromatic polycarbonate series resin, dried thoroughly to eliminate moisture, and extruded using a T-die extruder at 290°C cylinder temperature and 290°C dice temperature onto a cooling roll at 150°C surface temperature to obtain a 100µm-thick sheet.

### [Over-sheet B(2)]

Using NOVAREX 7022 manufactured by Mitsubishi Engineering Plastics Corporation (aromatic polycarbonate, weight average molecular weight: 50,000) as an aromatic polycarbonate series resin and NOVADURAN 5020S manufactured by Mitsubishi Engineering Plastics Corporation (homopolybutylene terephthalate, weight average molecular weight: 110,000) as an aromatic polyester series resin, NOVAREX 7022 and NOVADURAN 5020S were dry-blended at 60:40 mixing mass ratio, then, dried thoroughly to eliminate moisture and extruded using a T-die extruder at 260°C cylinder temperature and 250°C dice temperature onto a cooling roll at 98°C surface temperature to obtain a 100µm-thick sheet.

### [Over-sheet B(3)]

An aromatic polyester, comprising carboxylic acid monomer unit: 100 percent in mole terephthalic acid, and glycol monomer unit: 68 percent in mole ethylene glycol and 32 percent in mole 1,4-cyclohexane dimethanol, with glass transition temperature (Tg): 78°C and 0.67dl/g intrinsic viscosity (measurement conditions: JIS K7367-5) was used as a non-crystalline aromatic polyester series resin, dried thoroughly to eliminate moisture and extruded using a T-die extruder at 290°C cylinder temperature and 290°C dice temperature onto a cooling roll at 150°C surface temperature to obtain a 100µm-thick sheet.

### [Inlet sheet (C)]

After laminating "DIAFOIL T100" (100µm thickness) manufactured by Mitsubishi Polyester Film Corporation, which is a stretched PET sheet, with aluminum foil, a portion thereof was eliminated by etching to form an antenna circuit. Next, an IC chip was mounted onto the antenna circuit to form an inlet sheet implementing an IC chip and an antenna circuit.

### [Adhesive layer (D)]

The preparation was such that a toluene/MEK solution in which 100 parts in mass of VYLON 300 manufactured by TOYOBO CO., LTD. (co-polymer polyester series hot-melt type adhesive) and 8 parts in mass of DESMODUR L-75 manufactured by Bayer AG (polyisocyanate compound) were mixed was coated over both sides of the above inlet sheet (C), thoroughly dried at room temperature to evaporate the solvent, so that the adhesive layer became approximately 3µm thick.

### (Example 1) - not part of the invention

The sheets fabricated in the methods described above were stacked so that they were in the B(1)/A(3-2)/A(3-1)/(D)/(C)/(D)/A(3-1)/A(3-2)/B(2) order, each space between sheets was heat fuse-bonded by heat-pressing at 130°C and 10.5 MPa using a vacuum press (forming press VH1-1747 manufactured by KITAGAWA SEIKI Co., Ltd.), and after cooling to room temperature, by punching into card shape, a layered card was fabricated.

In so doing, the plant raw material plastic (lactic acid series polymer) occupied 41 percent in mass of the total plastic raw material.

For the obtained layered card, evaluation of heat resistance, impact resistance and fuse-bonding ability of each layer was conducted and the results are shown in Table 1.

### (Example 2) - not part of the invention

The sheets fabricated in the methods described above were stacked so that they were in the B(2)/A(3-2)/A(3-1)/(D)/(C)/(D)/A(3-1)/A(3-2)/B (2) order, each space between sheets was heat fuse-bonded by heat-pressing at 130°C and 10.5 MPa using a vacuum press (forming press VH1-1747 manufactured by KITAGAWA SEIKI Co., Ltd.), and after cooling to room temperature, by punching into card shape, a layered card was fabricated.

In so doing, the plant raw material plastic (lactic acid series polymer) occupied 40 percent in mass of the total plastic raw material.

For the obtained layered card, evaluation of heat resistance, impact resistance and fuse-bonding ability of each layer was conducted and the results are shown in Table 1.

### (Example 3) - not part of the invention

The sheets fabricated in the methods described above were stacked so that they were in the B(3)/A(3-2)/A(3-1)/(D)/(C)/(D)/A(3-1)/A(3-2)/B(3) order, each space between sheets was heat fuse-bonded by heat-pressing at 130°C and 10.5 MPa using a vacuum press (forming press VH1-1747 manufactured by KITAGAWA SEIKI Co., Ltd.), and after cooling to room temperature, by punching into card shape, a layered card was fabricated.

For the obtained layered card, evaluation of heat resistance, impact resistance and fuse-bonding ability of each layer was conducted and the results are shown in Table 1.

### (Example 4)

The sheets fabricated in the methods described above were stacked so that they were in the B(2)/A(4-2)/A(4-1)/A(4-2)/(D)/(C)/(D)/A(4-2)/A(4-1)/A(4-2)/B(2) order, each space between sheets was heat fuse-bonded by heat-pressing at 130°C and 10.5 MPa using a vacuum press (forming press VH1-1747 manufactured by KITAGAWA SEIKI Co., Ltd.), and after cooling to room temperature, by punching into card shape, a layered card was fabricated.

For the obtained layered card, evaluation of heat resistance, impact resistance and fuse-bonding ability of each layer was conducted and the results are shown in Table 1.

### (Example 5) - not part of the invention

The sheets fabricated in the methods described above were stacked so that they were in the B(2)/A (2)/(D)/(C)/(D)/A (2)/B(2) order, each space between sheets was heat fuse-bonded by heat-pressing at 130°C and 10.5 MPa using a vacuum press (forming press VH1-1747 manufactured by KITAGAWA SEIKI Co., Ltd.), and after cooling to room temperature, by punching into card shape, a layered card was fabricated.

For the obtained layered card, evaluation of heat resistance, impact resistance and fuse-bonding ability of each layer was conducted and the results are shown in Table 1.

### (Comparative Example 1)

The sheets fabricated in the methods described above were stacked so that they were in the A(1)/(D)/(C)/(D)/A(1) order, a layered card was fabricated by a similar method to Example 1. In so doing, the plant raw material plastic (lactic acid series polymer) occupied 67 percent in mass of the total plastic raw material.

For the obtained layered card, evaluation of heat resistance, impact resistance and fuse-bonding ability of each layer was conducted and the results are shown in Table 1.

**[Table 1]**

| | Heat resistance | Impact resistance | Fuse-bonding ability of each layer | Overall evaluation |
|---|---|---|---|---|
| Example 1 * | O | O | O | O |
| Example 2 * | O | O | O | O |
| Example 3 * | O | O | O | O |
| Example 4 | O | O | O | O |
| Example 5 * | O | O | O | O |
| Comparative Example 1 | X | X | O | X |

| | | | | |
|---|---|---|---|---|
| *: not part of the invention | | | | |

## Claims

1. A core-sheet for a card, which is a core sheet (A) for a card to be used together with an over-sheet (B), which over-sheet (B) is provided with a structure in which at least one layer is a layer having as a main component resin an aromatic polyester series resin or a polycarbonate series resin or a mixed resin of these both for the purpose of forming a layered card,
the core sheet (A) comprising two or more layers that are layered, among which at least one layer, the (A1) layer, is a layer having as a main component resin an aromatic polyester series resin or a polycarbonate series resin or a mixed resin of these both, and
at least one layer (A2) other than (A1) layer, is a lactic acid series resin layer having as a main component resin a lactic acid series polymer.

2. The core sheet for a card according to claim 1, wherein the lactic acid series resin layer (A2) contains an inorganic filler.

3. The core sheet for a card according to claim 1 or 2, wherein the lactic acid series resin layer (A2) contains a mixed resin combining at least one species or two or more species chosen from the group comprising aliphatic polyester series resin, aromatic aliphatic polyester series resin, and co-polymer of lactic acid series polymer and diol-dicarboxylic acid having a glass transition temperature of 0°C or lower.

4. The core sheet for a card according to any of claims 1 to 3, wherein the lactic acid series resin layer (A2) contains a methacrylic acid-containing elastic body with a glass transition temperature of 0°C or lower.

5. The core sheet for a card according to any of claims 1 to 4, wherein the lactic acid series resin layer (A2) contains a carbodiimide compound.

6. Use of the core sheet for a card according to any of the claims 1 to 5 for the preparation of a layered card by stacking the core sheet and an over-sheet (B), which over-sheet (B) is provided with a structure in which at least one layer is a layer having as a main component resin an aromatic polyester series resin or a polycarbonate series resin or a mixed resin of these both.

## Patentansprüche

1. Kernblatt für eine Karte, welches ein Kernblatt (A) für eine Karte, welche zusammen mit einem Überblatt (B) verwendet werden soll, ist, wobei das Überblatt (B) mit einer Struktur, bei der mindestens eine Schicht eine Schicht mit einem Harz der aromatischen Polyesterserien oder ein Harz der Polycarbonatserien oder ein gemischter Harz dieser beiden als Hauptbestandteilsharz ist, versehen ist, um eine geschichtete Karte zu bilden,
wobei das Kernblatt (A) zwei oder mehr Schichten aufweist, welche geschichtet sind, wobei unter diesen mindestens eine Schicht, die Schicht (A1), eine Schicht mit einem Harz der aromatischen Polyesterserien oder ein Harz der Polycarbonatserien oder ein gemischter Harz dieser beiden als Hauptbestandteilsharz ist und
mindestens eine Schicht (A2), welche von der Schicht (A1) verschieden ist, eine Schicht aus Harz der Milchsäureserien mit einem Polymer der Milchsäureserien als einen Hauptbestandteilsharz ist.

2. Kernblatt für eine Karte nach Anspruch 1, worin die Schicht aus Harz der Milchsäureserien (A2) einen anorganischen Füllstoff enthält.

3. Kernblatt für eine Karte nach einem der Ansprüche 1 oder 2, worin die Schicht aus Harz der Milchsäureserien (A2) einen gemischten Harz enthält, welcher mindestens eine Spezies oder zwei oder mehr Spezies, welche ausgewählt werden aus der Gruppe, bestehend aus einem Harz der aliphatischen Polyesterserien, einem Harz der aromatischen aliphatischen Polyesterserien und einem Copolymer eines Polymers der Milchsäureserien und einer Diol-Dicarbonsäure mit einer Glasübergangstemperatur von 0 °C oder weniger kombiniert.

4. Kernblatt für eine Karte nach einem der Ansprüche 1 bis 3, worin die Schicht aus einem Harz der Milchsäureserien (A2) einen elastischen Körper, enthaltend Methacrylsäure, mit einer Glasübergangstemperatur von 0 °C oder weniger enthält,

5. Kernblatt für eine Karte nach einem der Ansprüche 1 bis 4, worin die Schicht aus dem Harz der Milchsäureserien (A2) eine Carbodiimid-Verbindung enthält.

6. Verwendung des Kernblatts für eine Karte nach einem der Ansprüche 1 bis 5 für die Herstellung einer geschichteten Karte durch das Aufschichten des Kernblatts und eines Überblattes (B), wobei das Überblatt (B) mit einer Struktur, bei der mindestens eine Schicht eine Schicht mit einem Harz der aromatischen Polyesterserien oder ein Harz der Polycarbonatserien oder ein gemischter Harz dieser beiden als Hauptbestandteilsharz ist, versehen ist.

## Revendications

1. Feuille centrale pour une carte, qui est une feuille centrale (A) pour une carte qui doit être utilisée ensemble avec une feuille de recouvrement (B), la feuille de recouvrement (B) étant prévue avec une structure dans laquelle au moins une couche est une couche ayant comme une résine de composant principal une résine des séries de polyester aromatique ou une résine des séries de polycarbonate ou une résine mélangée de lesdits deux pour former une carte superposée,
la feuille centrale (A) comprenant deux ou plusieurs couches qui sont superposées, parmi lesquelles au moins une couche, la couche (A1), est une couche ayant comme résine de composant principal une résine des séries de polyester aromatique ou une résine des séries de polycarbonate ou une résine mélangée de lesdits deux et
au moins une couche (A2) autre que la couche (A1) est une couche d'une résine des séries de l'acide lactique ayant un polymère des séries de l'acide lactique comme une résine de composant principale,

2. Feuille centrale pour une carte selon la revendication 1, dans laquelle la couche d'une résine des séries de l'acide lactique (A2) contient une charge inorganique.

3. Feuille centrale pour une carte selon l'une des revendications 1 ou 2, dans laquelle la couche d'une résine des séries de l'acide lactique (A2) contient une résine mélangée combinant au moins une espèce ou deux ou plusieurs espèces sélectionnées parmi le groupe comprenant une résine des séries de polyester aliphatique, une résine des séries de polyester aliphatique aromatique et un copolymère d'un polymère des séries de l'acide lactique et un diol-acide dicarboxylique ayant une température de transition vitreuse égale ou inférieure à 0 °C.

4. Feuille centrale pour une carte selon l'une des revendications 1 à 3, dans laquelle la couche d'une résine des séries de l'acide lactique (A2) contient un corps élastique contenant de l'acide méthacrylique présentant une température de transition vitreuse égale ou inférieure à 0 °C.

5. Feuille centrale pour une carte selon l'une des revendications 1 à 4, dans laquelle la couche d'une résine des séries de l'acide lactique (A2) contient un composé carbodiimide.

6. Utilisation de la feuille centrale pour une carte selon l'une des revendications 1 à 5 pour la préparation d'une carte superposée par empilement de la feuille centrale et la feuille de recouvrement (B), la feuille de recouvrement (B) étant prévue avec une structure dans laquelle au moins une couche est une couche ayant comme une résine de composant principal une résine des séries de polyester aromatique ou une résine des séries de polycarbonate ou une résine mélangée de lesdits deux.
